# EUROPÄISCHE PATENTANMELDUNG

(11) **EP 2 689 666 A1**
(43) Veröffentlichungstag der Anmeldung: **29.01.2014**
(21) Anmeldenummer: 12178180.1
(22) Anmeldetag: 27.07.2012
(51) Int. Cl.: A23B 9/08, C12C 1/13, C12C 1/073, C12C 1/135, C12C 1/15, B65G 69/00

(54) **Verfahren und Vorrichtung zum Darren von Darrgut**

(71) Anmelder: Bühler GmbH, 38114 Braunschweig (DE)
(72) Erfinder: Silbermann, Kai, 38116 Braunschweig (DE); Reinberg, Detlef, 31226 Peine (DE); Benz, Matthias, 38102 Braunschweig (DE)
(74) Vertreter: Hepp Wenger Ryffel AG

(57) **Zusammenfassung**

Die Erfindung betrifft ein Verfahren zum Darren von Darrgut, insbesondere Getreide, Pseudogetreide, Ölsaaten oder Hülsenfrüchten, und eine Vorrichtung insbesondere zur Durchführung des Verfahrens, wobei das Verfahren als Prozessschritte ein Bereitstellen von zu behandelndem Darrgut auf einer Horde (20) mit mindestens einer Öffnung (21) zur Bildung einer Darrgutschicht (D) sowie die Erzeugung eines Gasstroms, insbesondere eines Luftstroms (L), beinhaltet und wobei der Gasstrom, insbesondere der Luftstrom (L), von einem der Darrgutschicht (D) zugewandten Raum (X) der Horde (20) mit mindestens einer Öffnung (21) zu einem der Darrgutschicht (D) abgewandten Raum (Y) der Horde (20) durch die Darrgutschicht (D) hindurch erzeugt wird.

## Beschreibung

Die Erfindung betrifft Verfahren sowie Vorrichtungen zum Darren von Darrgut, ein damit erhaltenes Produkt sowie ein Verfahren zum Umrüsten und/oder Aufrüsten einer Vorrichtung nach den Merkmalen der Oberbegriffe der unabhängigen Patentansprüche.

Im Zusammenhang mit Getreide, insbesondere Braugerste, hat das Weichen und Keimen des Korns und das anschliessende Trocknen beziehungsweise Darren des Korns zur Herstellung von lagerfähigem Malz zum eigentlichen Bierbrauen besondere Bedeutung. Eine Vorrichtung zum Trocknen des Korns wird als Darre bezeichnet.

Solche Einweich- beziehungsweise Keimungsschritte sowie anschliessende Darrschritte finden für weitere Lebensmittel und Pflanzenarten Anwendung, wie beispielsweise Hülsenfrüchte, z.B. Linsen, Pseudogetreide und Ölsaaten. Verschiedene weitere Lebensmittel werden zur Verbesserung der Haltbarkeit getrocknet.

Beim Darren muss darauf geachtet werden, dass eine möglichst gleichmässige Durchtrocknung durch alle Schichten des Darrgutes erfolgt und gewisse Grenztemperaturen nicht überschritten werden. Beim Überschreiten solcher Grenztemperaturen, die unter anderem von der Art des Darrgutes abhängen können, können Enzyme zerstört werden, oder Farbe oder Geschmack des Darrgutes können sich in unerwünschter Weise verändern.

Aus dem Stand der Technik sind Verfahren und Vorrichtungen zum Darren von Darrgut bekannt, mit denen das Darrgut mit Hilfe eines Luftstroms getrocknet und dadurch lagerfähig gemacht wird. In solchen Vorrichtungen zum Darren ist üblicherweise eine Platte mit Öffnungen angeordnet, auf welchen das Darrgut aufgeschichtet wird. Eine solche Platte wird üblicherweise als Horde bezeichnet. In bekannten Verfahren mittels solcher Vorrichtungen wird unterhalb der Horde ein Luftstrom erzeugt, wobei die Luft durch die Öffnungen der Horde von unten nach oben zum Darrgut gelangt.

Um eine gleichmässige Durchtrocknung des gesamten Darrgutes zu erzielen und insbesondere lokale Überhitzungen zu verhindern, müssen in solchen bekannten Verfahren aufwendig die Dauer, der Heizenergie-Einsatz, die elektrische Antriebsenergie für die Ventilatoren sowie die Wärmerückgewinnung aufeinander abgestimmt werden.

Im Weiteren ist aus der Publikation "Transient performance of a natural ventilation solar kiln" (Adnan H. Zahned, Moustafa M. Elsayed, Renewable Energy, Vol. 4, No. 2, pp. 189-95, 994) ein Verfahren zum Darren von Darrgut mit Hilfe einer Sonnendarre bekannt. In einer Sonnendarre wird das Darrgut mit Hilfe eines natürlich erzeugten Luftstroms gedarrt, welcher sowohl von oben wie auch von unten an das Darrgut gelangen kann. Ein Verfahren mittels einer Sonnendarre hat den grundlegenden Nachteil, dass die Trocknung des Darrguts witterungsabhängig ist und deshalb kaum gesteuert werden kann. Zudem wird das Darrgut hier von den oberflächlichen Schichten im Wesentlichen durch ein Überströmen eines Luftstroms getrocknet, womit eine gleichmässige Durchtrocknung des gesamten Darrguts kaum gewährleistet wird. Des Weiteren ist der natürlich erzeugte Luftstrom nur sehr schwach, so dass nur sehr geringe Schichtdicken getrocknet werden können. Ausserdem dauert die Trocknung aufgrund der geringen Strömungsgeschwindigkeit sehr lang. All diese Faktoren machen das bekannte Verfahren äusserst unwirtschaftlich.

Auch in US 5,420,393 ist eine Vorrichtung zum Erhitzen von Lebensmitteln gezeigt, wobei ein mittig zu einer Horde erzeugter, horizontaler Luftstrom entlang der unteren und oberen Oberflächenschichten des Darrgutes geleitet wird. Auch hier wird eine gleichmässige Durchtrocknung des gesamten Darrguts kaum gewährleistet. Eine annähernd gleichmässige Durchtrocknung ist nur bei sehr geringen Schichtdicken möglichen, was auch dieses Verfahren unwirtschaftlich macht. Zudem ist die Vorrichtung nicht für den grossindustriellen Einsatz geeignet.

Es ist deshalb eine Aufgabe der vorliegenden Erfindung, Verfahren sowie Vorrichtungen zum Darren bereitzustellen, welche die beschriebenen Nachteile des Standes der Technik überwinden. Insbesondere sollen vereinfachte Verfahren zum Darren sowie Vorrichtungen bereitgestellt werden, mit denen das Darrgut gleichmässig und schonend getrocknet werden kann.

Erfindungsgemäss wird diese Aufgabe mit den Verfahren sowie Vorrichtungen mit den Merkmalen der unabhängigen Patentansprüche gelöst.

Das erfindungsgemässe Verfahren zum Darren von Darrgut, insbesondere Getreide, Pseudogetreide, Ölsaaten oder Hülsenfrüchten, beinhaltet als ersten Prozessschritt ein Bereitstellen von zu behandelndem Darrgut auf einer Horde mit mindestens einer Öffnung zur Bildung einer Darrgutschicht. In einem weiteren Prozessschritt erfolgt die Erzeugung eines Gasstroms, insbesondere eines Luftstroms, wobei der Gasstrom von einem der Darrgutschicht zugewandten Raum der Horde zu einem der Darrgutschicht abgewandten Raum der Horde durch die Darrgutschicht und die Horde hindurch erzeugt wird.

Es wurde gefunden, dass ein solches Verfahren in einfacher Weise eine gleichmässige und schonende Durchtrocknung des Darrgutes garantiert. Denn zum einen muss hierdurch der Gasstrom das aus dem Darrgut zu entfernende Wasser nicht entgegen der Wirkrichtung der Schwerkraft bewegen, so wie es bei einem herkömmlichen Gasstrom von unten nach oben der Fall ist. Stattdessen wird das Wasser entlang der Wirkrichtung der Schwerkraft bewegt, was wesentlich effektiver ist. Zudem kann das Wasser schneller aus dem Darrgut ausgetrieben werden. Infolge dessen erfolgt die Trocknung insgesamt schneller, was auch einer unerwünschten Erhitzung des Darrgutes entgegenwirkt. Im Weiteren wird die oberste Schicht des Darrguts zuerst trocken, so dass das trockene Darrgut dann leicht abgetragen und aus einem Prozessraum der Vorrichtung gefördert werden kann.

Die Öffnung der Horde sollte derart dimensioniert und angeordnet sein, dass das Darrgut nicht durch sie hindurch fällt und gleichzeitig ein Gasstrom durch sie hindurch strömen kann.

Vorzugsweise wird der Gasstrom, insbesondere der Luftstrom, mit Hilfe mindestens eines Ventilators, insbesondere eines Belüftungsventilators, erzeugt.

Ein Gasstrom von einem der Darrgutschicht zugewandten Raum der Horde zu einem der Darrgutschicht abgewandten Raum der Horde kann einerseits mit Hilfe eines Ventilators erzeugt werden, welcher in dem der Darrgutschicht zugewandten Raum angeordnet ist und dessen Druckseite zur Darrgutschicht und zur Horde gerichtet ist. Alternativ oder zusätzlich kann der Gasstrom mit Hilfe eines Ventilators erzeugt werden, welcher in dem der Darrgutschicht abgewandten Raum angeordnet ist und dessen Ansaugseite zur Horde und zur Darrgutschicht gerichtet ist.

Das erfindungsgemässe Verfahren wird vorzugsweise in einer Darre durchgeführt. Es ist jedoch auch denkbar, dass das erfindungsgemässe Verfahren in einem modifizierten Keim-Darr-Kasten oder einem modifizierten Weichkeim-Darr-Kasten durchgeführt wird. In einem Keim-Darr-Kasten wird das Darrgut während eines vorangehenden Keimschrittes mit Wasser besprüht. Ein Weichkeim-Darr-Kasten umfasst zusätzlich zu einer Darre mindestens eine Wasserzufuhr- und eine Wasserabfuhrleitung, wodurch in einem vorgängigen Keimschritt das zu behandelnde Gut auf einer Horde unter Wasser gesetzt werden kann.

Vorzugsweise verläuft der Luftstrom in einem spitzen Winkel zur Wirkrichtung der Schwerkraft, insbesondere im Wesentlichen parallel zur Wirkrichtung der Schwerkraft durch die Darrgutschicht hindurch, d.h. von einem Raum oberhalb der Horde zu einem Raum unterhalb der Horde.

Ein erster Prozessschritt einer Variante des erfindungsgemässen Verfahrens beinhaltet die Bereitstellung von zu behandelndem Darrgut auf einer Horde zur Bildung einer Darrgutschicht. Ein weiterer Prozessschritt beinhaltet die Erzeugung eines Gasstroms, insbesondere eines Luftstroms, welcher durch die Darrgutschicht hindurch strömt. In einem dritten Prozessschritt wird mindestens einmal, vorzugsweise mehrmals eine der Horde abgewandte Teilschicht der Darrgutschicht aus dem der Darrgutschicht zugewandtem Raum abgetragen. Das Abtragen kann beispielweise mit einer wie unten näher beschriebenen Abtrageinrichtung erfolgen.

Ein resultierendes Abtragen in Schichten von oben nach unten hat den Vorteil, dass sich der Schichtwiderstand für den Luftstrom aufgrund der sich kontinuierlich verringernden Schichtdicke des Darrgutes kontinuierlich verringert. Dadurch wird gleichzeitig der erforderliche Energieverbrauch für den oder die Ventilatoren verringert.

Vorteilhaft erfolgt das Abtragen im dritten Prozessschritt mit Hilfe einer Abtrageinrichtung, welche relativ zur Horde um eine insbesondere vertikale Achse drehbar ist. Dabei kann die Abtrageinrichtung um diese Achse drehbar sein, während die Horde sich nicht bewegt. Alternativ dazu ist es aber auch denkbar und liegt im Rahmen der Erfindung, dass die Horde um die Achse drehbar ist und die Abtrageinrichtung sich nicht um diese Achse bewegt. Durch Drehen der Abtrageinrichtung um die Drehachse relativ zur Horde ist es dann möglich, dass die Abtrageinrichtung zumindest einen Grossteil der Fläche der Horde überstreicht, falls diese beispielsweise kreisförmig oder ringförmig ist.

In bevorzugten Ausführungsformen umfasst die Abtrageinrichtung mindestens eine Förderschnecke, mittels welcher die Teilschicht der Darrgutschicht abgetragen werden kann. Eine derartige Ausführung ist baulich besonders einfach. Zudem schont eine Förderschnecke das Darrgut, da sie insbesondere zu nur wenig Bruch des Darrgutes führt.

Die Förderschnecke ist um eine Rotationsachse rotierbar, welche eine Längsachse der Förderschnecke bildet. Zweckmässigerweise erstreckt sich diese Längsachse im Wesentlichen in horizontaler Richtung. Mit besonderem Vorteil ist die Förderschnecke zusätzlich um eine im Wesentlichen vertikale Drehachse relativ zur Horde drehbar. Beispielsweise kann die Förderschnecke um diese Achse drehbar sein, während die Horde sich nicht bewegt. Alternativ dazu ist es aber auch denkbar und liegt im Rahmen der Erfindung, dass die Horde um eine im Wesentlichen vertikale Achse drehbar ist und die Förderschnecke sich nicht um diese Achse bewegt. Durch Drehen der Förderschnecke um die Drehachse relativ zur Horde ist es dann möglich, dass die Förderschnecke zumindest einen Grossteil der Fläche der Horde überstreicht, falls diese beispielsweise kreisförmig oder ringförmig ist.

Alternativ oder zusätzlich kann die Abtrageinrichtung auch mindestens einen Schaber enthalten, welcher derart ausgebildet und relativ zur Horde bewegbar ist, dass auf der Horde befindliches Darrgut mit Hilfe des Schabers abgetragen werden kann. Hierfür kann der Schaber mindestens eine Abtragfläche aufweisen, die in Kontakt mit dem Darrgut gelangen kann, um dieses abzutragen. Insbesondere kann der Schaber um eine vertikale Drehachse drehbar sein und hierdurch beispielsweise zumindest einen Grossteil der Fläche einer kreisförmigen oder ringförmigen Horde überstreichen. Dabei können beispielsweise ein oder mehrere Schaber an einem gemeinsamen Balken angeordnet sein, der sich in horizontaler Richtung erstrecken und um die vertikale Drehachse drehbar sein kann. Die Vorrichtung kann auch mehrere Balken aufweisen, beispielsweise drei bis sechs Balken, die in Umfangsrichtung um die vertikale Drehachse herum angeordnet sein können, insbesondere in gleichmässigem Winkelabstand. An jedem der Balken können ein oder mehrere Schaber angeordnet sein.

Die Abtragfläche kann eben oder gewölbt sein. Falls der Schaber um eine vertikale Drehachse drehbar ist, so verläuft bevorzugt zumindest ein Teil der Abtragfläche unter einem Winkel zu einer senkrecht zur Drehachse verlaufenden radialen Richtung. Dabei bedeutet "unter einem Winkel", dass die radiale Richtung nicht parallel zur Abtragfläche verläuft. Falls die Abtragfläche gewölbt ist, so bedeutet "unter einem Winkel", dass die radiale Richtung nicht parallel zu einer jeweiligen Tangentialebene an zumindest einem Teil der Abtragfläche verläuft.

Ein Verlauf unter einem Winkel bewirkt, dass ein Teil der Darrgutschicht aufgrund der Drehung des Schabers um die vertikale Drehachse in den mittleren Bereich oder den äusseren Bereich der Horde abgetragen werden kann - je nach dem Winkel und der Drehrichtung des Schabers. In einigen Ausführungsbeispielen ist der Schaber als ebenes und beispielsweise rechteckiges Blech ausgeführt, welches unter einem Winkel zur radialen Richtung verläuft.

Ebenfalls bevorzugt wird die Teilschicht der Darrgutschicht in Richtung eines mittleren Bereichs der Horde gefördert und dadurch abgetragen. Insbesondere kann die Horde als horizontal ausgerichtete Platte mit im Wesentlichen ringförmiger Grundfläche ausgestaltet sein, wobei eine zentrale Öffnung dieser ringförmigen Grundfläche den mittleren Bereich bildet.

Durch die zentrale Öffnung der Horde kann sich eine Sammeleinrichtung für das Darrgut mit einer zentralen Entladeöffnung zum Abtransport des Darrguts erstrecken. Diese Sammeleinrichtung wird im Folgenden als Glocke bezeichnet. Die Glocke kann beispielweise rohrförmig ausgebildet sein und in einer horizontalen Ebene einen kreisförmigen Querschnitt aufweisen. Die Glocke kann mindestens eine Abräumöffnung aufweisen, durch welche das Darrgut von der Horde in die Entladeöffnung gefördert werden kann, insbesondere mit Hilfe mindestens einer Förderschnecke und/oder mindestens eines Schabers. Die Abräumöffnung kann seitlich oder an der Oberseite der Glocke angeordnet sein.

Ein Abtragen in Richtung des mittleren Bereichs erlaubt es, dass das Darrgut in einem vergleichsweise kleinen Raumbereich gesammelt werden kann, insbesondere mit einer Glocke mit vergleichsweise kleinem Durchmesser. Zudem kann das Darrgut sowohl mit Hilfe einer sich bewegenden Abtrageinrichtung als auch mit Hilfe einer sich bewegenden Horde in den mittleren Bereich bewegt werden. Ein Abtragen in Richtung eines äusseren Bereichs einer sich nicht bewegenden Horde mit Hilfe einer um ein vertikale Achse drehbaren Abtrageinrichtung führt dazu, dass das Darrgut zu verschiedenen Stellen entlang des äusseren Bereichs bewegt wird, was dass Sammeln des Darrguts deutlich erschwert.

Alternativ zu einer Ringform kann die Horde aber auch eine andere Form aufweisen. Beispielsweise kann sie eine eckige, insbesondere rechteckige Aussenkontur haben. Auf einer solchen Horde befindliches Darrgut kann beispielsweise mit Hilfe eines Schabers abgetragen werden, welcher entlang der Horde in einer im Wesentlichen horizontalen Richtung verschiebbar ist.

Mit besonderem Vorteil ist die Abräumöffnung verstellbar. Unter dem Begriff "verstellbar" wird einerseits verstanden, dass die Position der Abräumöffnung relativ zur Horde und/oder zur Abtrageinrichtung, insbesondere zur Förderschnecke und/oder zum Schaber, einstellbar ist. So ist es beispielsweise möglich, dass die Glocke als Ganzes in der vertikalen Richtung bewegbar ist. Alternativ oder zusätzlich wird unter dem Begriff "verstellbar" verstanden, dass die Grösse und/oder die Form der Abräumöffnung einstellbar ist. Dies kann beispielsweise durch mindestens ein Verschlusselement erreicht werden, welches relativ zur Abräumöffnung derart bewegbar, insbesondere verschiebbar und/oder verschwenkbar, angeordnet ist, dass je nach relativer Position zwischen Verschlusselement und Abräumöffnung verschiedene Anteile der Abräumöffnung freigegeben sind. Bei dem Verschlusselement kann es sich um einen Schieber handeln, welcher relativ zur Glocke um eine insbesondere vertikale Achse schwenkbar ist. Alternativ oder zusätzlich kann der Schieber auch in einer vertikalen Richtung relativ zur Glocke verschiebbar sein. Insbesondere ist die Abräumöffnung derart verstellbar, dass die Höhe des jeweils untersten Punkts des freigegebenen Teils der Abräumöffnung einstellbar ist.

Aufgrund der Verstellbarkeit der Abräumöffnung kann erreicht werden, dass nur ein bestimmter Anteil des von der Abräumeinrichtung geförderten Darrguts durch die Abräumöffnung in die Entladeöffnung der Glocke eindringen kann. Beispielsweise kann in einer ersten Stellung eines Schiebers der unterste Punkt des freigegebenen Teils in einer ersten Höhe liegen, und in einer zweiten Stellung des Schiebers kann der unterste Punkt in einer zweiten, geringeren Höhe liegen. Dann kann in der ersten Stellung das Darrgut abgeräumt werden, welches sich oberhalb der ersten Höhe befindet; in der zweiten Stellung kann zusätzlich das Darrgut abgeräumt werden, welches sich zwischen der ersten Höhe und der zweiten Höhe befindet.

Vorteilhafterweise ist die Glocke um eine im Wesentlichen vertikale Achse relativ zur Horde drehbar. Insbesondere kann die Glocke drehbar sein, während die Horde sich nicht bewegt. Besonders günstig ist es, wenn diese vertikale Achse mit der Drehachse der Förderschnecke oder des Schabers übereinstimmt und die Glocke und die Förderschnecke bzw. der Schaber gemeinsam um diese Achse rotieren. Hierdurch kann erreicht werden, dass das Darrgut von der Förderschnecke oder dem Schaber stets auf die mindestens eine Abräumöffnung zu gefördert wird. Alternativ kann jedoch auch die Horde drehbar sein, während sich die Glocke nicht bewegt.

Die Abräumöffnung kann schrittweise oder stufenlos verstellbar sein. Zu diesem Zweck kann beispielsweise das Verschlusselement, insbesondere der Schieber, schrittweise oder stufenlos verstellbar sein.

Bevorzugt wird nur eine der Horde abgewandte Teilschicht, insbesondere eine oberste Teilschicht, der Darrgutschicht abgetragen, welche trocken ist. Insbesondere kann nur eine Teilschicht der Darrgutschicht abgetragen werden, deren Feuchtigkeit eine vordefinierte Grenzfeuchtigkeit unterschreitet, während eine andere Teilschicht der Darrgutschicht, deren Feuchtigkeit noch oberhalb der vordefinierten Grenzfeuchtigkeit liegt, nicht abgetragen wird. Diese vordefinierte Grenzfeuchtigkeit kann beispielsweise unterhalb von 15 %, unterhalb von 10 % oder unterhalb von 5 % liegen, wobei eine Grenzfeuchtigkeit unterhalb von 5 % für Braumalz besonders bevorzugt ist.

Indem das Darrgut nur so lange getrocknet wie notwendig wird, kann der Energieverbrauch weiter gesenkt werden. Zudem kann eine besonders homogene Trocknung in den abgetragenen Darrgutschichten erzielt werden.

Ein solches Verfahren zum teilweisen Abtragen der Darrgutschicht von oben nach unten ist auch denkbar, wenn der Gasstrom - im Gegensatz zur oben beschriebenen Variante - die Horde und die Darrgutschicht von unten nach oben durchströmt.

Eine Kombination dieser beiden Verfahrenaspekte ist jedoch besonders vorteilhaft: Aufgrund des von oben nach unten strömenden Gasstroms wird zuerst eine jeweils oberste Teilschicht der Darrgutschicht trocken und kann dann abgetragen werden. Dadurch kann das jeweils direkt unter der zuvor abgetragenen Teilschicht der Darrgutschicht verbliebene Darrgut vom Gasstrom direkt angeströmt und besonders schnell und gleichmässig getrocknet werden.

Vorzugsweise wird bei zumindest einigen Durchführungen des dritten Prozessschritts eine der Horde abgewandte Teilschicht der Darrgutschicht abgetragen, deren vertikale Abmessung höchstens 50 %, bevorzugt höchstens 25 % und besonders bevorzugt höchstens 10 % der vertikalen Abmessung der gesamten Darrgutschicht vor der ersten Durchführung des dritten Prozessschrittes beträgt.

Unterschreitet die vertikale Abmessung der Darrgutschicht eine gewisse Mindestabmessung, so kann es passieren, dass sich durch die Einwirkung des Gasstroms einzelne Kanäle in der Darrgutschicht bilden, durch die der Gasstrom dann ausschliesslich strömt. Dies würde zu einer ungleichmässigen Trocknung führen. Daher wird bevorzugt darauf geachtet, dass während des Abtragens eine Darrgutschicht mit einer vordefinierten Mindestabmessung auf der Horde aufliegt. Diese vordefinierte Mindestabmessung hängt unter anderem von der Art des Darrgutes ab. Beispielsweise kann sie 30 cm betragen.

Bei der letzten Durchführung des dritten Prozessschrittes kann also gegebenenfalls eine Teilschicht abgetragen werden, deren vertikale Abmessung grösser ist als die der zuvor abgetragenen Teilschichten. So können beispielsweise von einer anfänglichen Darrgutschicht mit einer Abmessung von 100 cm zunächst 7 Teilschichten mit einer Abmessung von 10 cm abgetragen werden, so dass sich eine verbleibende Abmessung von 30 cm ergibt. Damit eine vordefinierte Mindestabmessung von 30 cm nicht unterschritten wird, wird die gesamte verbleibende Teilschicht von 30 cm in einer einzigen weiteren Durchführung des dritten Prozessschrittes abgetragen.

In vielen Ausführungsformen wird als Gasstrom ein Luftstrom verwendet, welcher der Umgebung entnommen wird. Optional kann die relative Luftfeuchtigkeit des Luftstroms vor dem Kontakt mit dem Darrgut angepasst werden, indem ihm entweder Feuchtigkeit hinzugefügt oder entnommen wird. Es ist jedoch in vielen Fällen ausreichend, wenn die relative Luftfeuchtigkeit des der Umgebung entnommenen Luftstroms unverändert bleibt.

Der im erfindungsgemässen Verfahren verwendete Gasstrom, insbesondere der Luftstrom, kann beispielsweise eine Temperatur im Bereich von 30 °C bis 130 °C aufweisen. Diese Temperatur kann jedoch unter anderem von der Art des Darrgutes und/oder der gewünschten Endfeuchtigkeit abhängen.

Der Gasstrom, insbesondere der Gasstrom, kann mit an sich bekannten Heizmitteln auf eine gewünschte Temperatur erhitzt werden.

Unter energetischen Gesichtspunkten ist es besonders vorteilhaft, wenn ein Teil der Wärmeenergie eines Teils des Gasstroms, welcher bereits die Darrschicht durchströmt hat (ausströmender Gasstrom), auf einen Teil des Gasstroms übertragen wird, bevor dieser die Darrschicht durchströmt (einströmender Gasstrom). Dies kann beispielsweise mit Hilfe mindestens eines Wärmetauschers erfolgen, insbesondere mindestens eines Kreuzstromwärmetauschers, durch den sowohl der ausströmende Gasstrom als auch der einströmende Gasstrom geführt werden. Der Kreuzstromwärmetauscher bildet dann ein oben genanntes Heizmittel, mit dem der Gasstrom beispielsweise von einer Umgebungstemperatur auf eine erste erhöhte Temperatur erhöht werden kann.

Alternativ ist es aber auch denkbar und liegt im Rahmen der Erfindung, dass die Vorrichtung mindestens einen ersten Wärmetauscher und mindestens einen zweiten Wärmetauscher umfasst, wobei der erste Wärmetauscher im einströmenden Gasstrom und der zweite Wärmetauscher im ausströmenden Gasstrom angeordnet ist. Die Wärmeenergie kann in diesem Falle mit Hilfe eines Wärmetauschfluids vom zweiten Wärmetauscher zum ersten Wärmetauscher übertragen werden.

Im Wärmetauscher kann Wasser aus dem Darrgut, welches durch den Gasstrom aufgenommen wurde, kondensieren. Dieses Wasser kann durch einen am Wärmetauscher angeordneten Abfluss wieder abgeben werden.

Bevorzugt kann im einströmenden Gasstrom stromabwärts des Wärmetauschers noch mindestens ein weiteres Heizmittel angeordnet sein. Mit einem solchen weiteren Heizmittel kann der Gasstrom weiter von der ersten erhöhten Temperatur auf eine zweite, noch weiter erhöhte Temperatur erhitzt werden.

Ein weiterer Aspekt der Erfindung bezieht sich auf eine Vorrichtung, welche insbesondere zur Durchführung des erfindungsgemässen Verfahrens dient.

Die erfindungsgemässe Vorrichtung zum Darren von Darrgut, insbesondere von Getreide, Pseudogetreide, Ölsaaten oder Hülsenfrüchten, umfasst einen Prozessraum mit mindestens einer darin angeordneten Horde zur Aufnahme einer Darrgutschicht. Die Horde weist mindestens eine Öffnung auf. Im Weiteren umfasst die Vorrichtung mindestens einen Ventilator zur Erzeugung eines Gasstroms, insbesondere eines Luftstroms. Die Öffnung der Horde sollte derart dimensioniert und angeordnet sein, dass das Darrgut nicht durch sie hindurch fällt und gleichzeitig ein Gasstrom durch sie hindurch strömen kann.

Erfindungsgemäss ist der Ventilator derart ausgebildet und angeordnet, dass ein Gasstrom, insbesondere ein Luftstrom, von einem der Darrgutschicht zugewandten Raum zu einem der Darrgutschicht abgewandten Raum durch die Darrgutschicht und die Horde hindurch erzeugbar ist.

Der Ventilator kann in einem der Darrgutschicht zugewandten Raum angeordnet sein und/oder in Fluidverbindung mit dem der Darrgutschicht zugewandten Raum stehen, um einen Gasstrom von dem der Darrgutschicht zugewandten Raum zu dem der Darrgutschicht abgewandten Raum durch die Darrgutschicht hindurch zu erzeugen.

Der Ventilator kann auch in dem der Darrgutschicht abgewandten Raum der Darrgutschicht angeordnet sein und/oder in Fluidverbindung mit dem der Darrgutschicht abgewandten Raum stehen und derart konfiguriert sein, dass ein Gasstrom von dem Darrgutschicht zugewandtem Raum zu dem der Darrgutschicht abgewandten Raum durch die Darrgutschicht hindurch erzeugbar ist.

Eine derartige Konfiguration des Ventilators ist so zu verstehen, dass eine Ansaugseite des Ventilators zum Prozessraum gerichtet ist, um einen Gasstrom von dem Darrgutschicht zugewandten Raum zu dem der Darrgutschicht abgewandten Raum durch die Darrgutschicht hindurch zu erzeugen.

Im Weiteren kann auch sowohl ein Ventilator in dem der Darrgutschicht zugewandtem Raum angeordnet sein und/oder in Fluidverbindung mit dem der Darrgutschicht zugewandten Raum stehen wie auch ein Ventilator in dem der Darrgutschicht abgewandtem Raum angeordnet sein und/oder in Fluidverbindung mit dem der Darrgutschicht abgewandten Raum stehen.

Vorzugsweise steht der Ventilator in Fluidverbindung mit einer Leitung zur Zufuhr eines Gases, insbesondere Luft, zur Erzeugung eines Gasstroms von einem der Darrgutschicht zugewandten Raum zu einem der Darrgutschicht abgewandten Raum durch die Darrgutschicht hindurch. Gleichzeitig oder alternativ kann der Ventilator in Fluidverbindung zu einer Leitung zur Abfuhr eines Gases, insbesondere Luft, stehen, wobei der Ventilator derart konfiguriert ist, dass ein Gasstrom von dem der Darrgutschicht zugewandten Raum zu dem der Darrgutschicht abgewandten Raum durch die Darrgutschicht hindurch erzeugbar ist.

Dadurch kann der Ventilator ausserhalb des Prozessraums angeordnet werden und wird vorteilhaft aufgrund der Beabstandung vom Prozessraum weniger verschmutzt.

Eine Variante der erfindungsgemässen Vorrichtung umfasst einen Prozessraum mit einer darin angeordneten Horde zur Aufnahme einer Darrgutschicht. Im Weiteren umfasst die Vorrichtung eine Abtrageinrichtung, welche relativ zur Horde um eine insbesondere vertikale Achse drehbar ist. Wie oben bereits erläutert wurde, kann die Abtrageinrichtung so zumindest einen Grossteil der Fläche der Horde überstreichen, falls diese beispielsweise kreisförmig oder ringförmig ist.

Bevorzugt ist die Vorrichtung derart ausgestaltet, dass die Darrgutschicht und die Abtrageinrichtung im Wesentlichen entlang einer Vertikale zur Horde relativ zueinander verschiebbar sind.

Die Abtrageinrichtung dient dem Abtragen einer der Horde abgewandten Teilschicht der Darrgutschicht von der Horde, d.h. insbesondere einer obersten Teilschicht der Darrgutschicht. Einerseits kann die Darrgutschicht vertikal relativ zur Abtrageinrichtung verschiebbar sein. Alternativ oder zusätzlich kann die Abtrageinrichtung relativ zur Darrgutschicht verschiebbar sein.

Vorzugsweise ist die Abtrageinrichtung derart ausgestaltet, dass sie relativ zur Darrgutschicht verschiebbar, insbesondere heb-und senkbar ist. Hierdurch ist dann auch die Darrgutschicht relativ zur Horde verschiebbar. Alternativ ist es jedoch auch denkbar und liegt im Rahmen der Erfindung, dass die Horde heb-und senkbar ist.

Die Kombination einer erfindungsgemässen Anordnung des Ventilators und einer erfindungsgemässen Abtrageinrichtung hat den Vorteil, dass der durch den Ventilator erzeugte, von oben nach unten durch die Darrgutschicht und die Horde strömende Gasstrom eine Trocknung der jeweils obersten Teilschicht der Darrgutschicht bewirkt. Diese oberste Teilschicht kann mit Hilfe der Abtrageinrichtung abgetragen werden, wodurch dann das jeweils direkt unter der zuvor abgetragenen Teilschicht der Darrgutschicht verbliebene Darrgut vom Gasstrom direkt angeströmt und besonders schnell und gleichmässig getrocknet werden kann.

Vorzugsweise umfasst die Abtrageinrichtung mindestens eine Förderschnecke zum Abtragen und Fördern von Darrgut von der Horde. Alternativ oder zusätzlich kann die Abtrageinrichtung auch mindestens einen wie oben beschriebenen Schaber enthalten.

Die erfindungsgemässe Vorrichtung kann eine Einrichtung zum Abkühlen des behandelten Darrguts enthalten. Bevorzugt ist diese Einrichtung zum Abkühlen ausserhalb des Prozessraums angeordnet, in dem das Darren stattfindet. Eine jeweils abgetragene und aus der Vorrichtung geförderte Teilschicht des Darrguts kann in einer solchen Einrichtung zum Abkühlen kontinuierlich abgekühlt werden. Gleichzeitig kann ein weiterer Teil des Darrgutes im Prozessraum gedarrt werden. Da sich die Abkühlung des behandelten Darrgutes konventionell an den Darrprozess im Prozessraum anschliesst, kann durch diese ausserhalb des Prozessraums angeordnete Einrichtung zum Abkühlen die gesamte Prozesszeit vorteilhaft verkürzt werden. Das Abkühlen erfolgt beispielsweise mittels eines Gasstroms, bevorzugt mittels eines Luftstroms, dessen Temperatur unterhalb der Temperatur des Darrgutes liegt.

Vorzugsweise ist stromabwärts von der Horde eine Kondensationseinrichtung angeordnet. Das Wasser aus dem Darrgut, welches durch den Gasstrom aufgenommen wurde, kann durch die Kondensationseinrichtung wieder abgegeben werden. Dies hat den Vorteil, dass der Gasstrom aufgrund der resultierenden Senkung der relativen Feuchtigkeit, insbesondere der relativen Luftfeuchtigkeit, zirkuliert werden kann. Ein oben beschriebener Wärmetauscher kann die Funktion der Kondensationseinrichtung übernehmen.

Vorzugsweise umfasst die Kondensationseinrichtung, insbesondere ein Wärmetauscher, einen Abfluss zur Entleerung des Kondensats aus der Vorrichtung.

Ein weiterer Aspekt der Erfindung bezieht sich auf ein Produkt, d.h. das behandelte Darrgut, welches durch das oben beschriebene, erfindungsgemässe Verfahren und/oder mit Hilfe der oben beschriebenen, erfindungsgemässen Vorrichtung erhalten wurde.

Noch ein weiterer Aspekt der Erfindung bezieht sich auf ein Verfahren zum Umrüsten und/oder Aufrüsten einer Vorrichtung zum Darren von Darrgut. In einer Variante enthält dieses Verfahren den Schritt der Bereitstellung eines Ventilators, welcher derart ausgebildet und angeordnet ist, dass ein Gasstrom, insbesondere ein Luftstrom, von einem der Darrgutschicht zugewandten Raum zu einem der Darrgutschicht abgewandten Raum durch die Darrgutschicht und die Horde hindurch erzeugbar ist. Insbesondere kann ein bereits vorhandener Ventilator der Vorrichtung derart umkonfiguriert werden, dass mit seiner Hilfe ein Gasstrom erzeugbar ist, der von einem der Darrgutschicht zugewandten Raum zu einem der Darrgutschicht abgewandten Raum durch die Darrgutschicht hindurch strömen kann. Ein bereits vorhandener Ventilator kann aber auch an eine derartige Position gebracht werden, dass mit seiner Hilfe ein solcher Gasstrom erzeugbar ist.

Alternativ oder zusätzlich enthält das Verfahren den Schritt der Bereitstellung einer Abtrageinrichtung, welche derart ausgebildet und in der Vorrichtung angeordnet ist, dass die Darrgutschicht und die Abtrageinrichtung relativ zueinander im Wesentlichen entlang einer Vertikale zur Horde verschiebbar sind.

Die in dem Verfahren zum Umrüsten und/oder Aufrüsten bereitgestellte Abtrageinrichtung kann zudem eines, mehrere oder alle der oben beschriebenen Merkmale aufweisen.

Die Erfindung wird nachfolgend anhand von mehreren Ausführungsbeispielen und Zeichnungen näher erläutert, ohne die Erfindung auf diese zu beschränken. Es zeigen:
- Figur 1:: eine schematische Darstellung einer ersten erfindungsgemässen Vorrichtung;
- Figuren 2a und b:: zwei Ansichten einer zweiten erfindungsgemässen Vorrichtung mit einer Abtrageinrichtung mit einer Förderschnecke;
- Figuren 3a und b:: eine schematische Darstellung einer ersten Glocke einer erfindungsgemässen Vorrichtung;
- Figuren 4a und b:: eine schematische Darstellung einer zweiten Glocke einer erfindungsgemässen Vorrichtung;
- Figuren 5a und b:: eine schematische Darstellung einer dritten Glocke einer erfindungsgemässen Vorrichtung;
- Figuren 6a und b:: zwei Ansichten einer dritten erfindungsgemässen Vorrichtung mit einer Abtrageinrichtung mit mehreren Schabern.

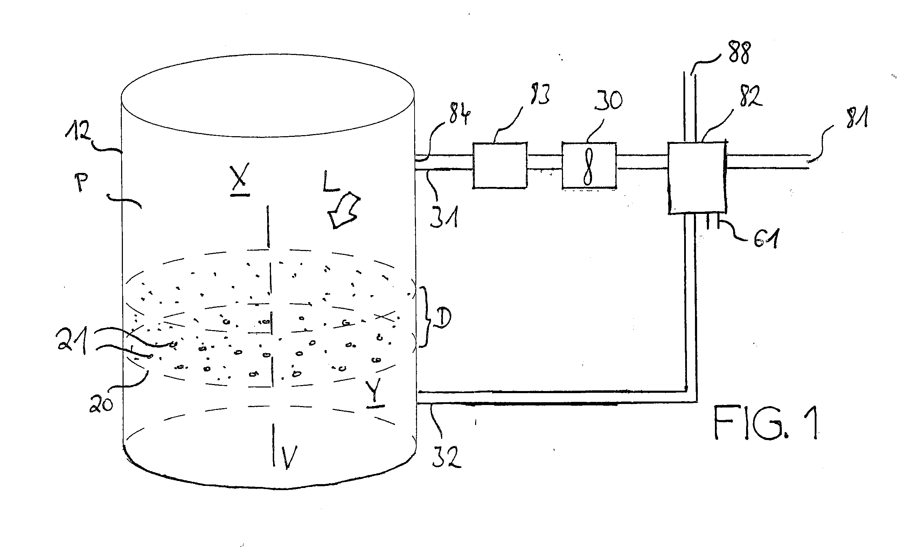

Figur 1 zeigt eine schematische Darstellung einer ersten erfindungsgemässen Vorrichtung. Die Vorrichtung enthält einen Prozessraum P, welcher von einer zylindermantelförmigen Wand 12 umschlossen ist. Im Prozessraum P ist eine Horde 20 mit einer Vielzahl von Öffnungen 21 angeordnet, auf welcher eine Darrgutschicht D aufliegt. Die Darrgutschicht D kann z.B. Getreide umfassen, insbesondere Braumalz.

Ein Ventilator 30 saugt durch eine Eintrittsöffnung 81 Luft aus der Umgebung an, die von dort zunächst durch erste Leitungen eines Kreuzstromwärmetauschers 82 strömt, wo sie auf eine erste erhöhte Temperatur aufgeheizt wird. Nach dem Durchströmen des Ventilators 30 gelangt die Luft zu einer weiteren Heizeinrichtung 83, wo sie auf eine zweite, nochmals erhöhte Temperatur aufgeheizt wird. Anschliessend strömt die Luft durch eine Leitung 31 und durch eine in der Wand 12 angeordnete Öffnung 84 seitlich in den Prozessraum P hinein. Auf diese Weise wird ein Luftstrom L erzeugt, der von einem Raum X oberhalb der Horde 20 von oben nach unten durch die Darrschicht D und die Horde 20 hindurch zu einem Raum Y unterhalb der Horde 20 strömt. Unterhalb der Horde 20 wird die Luft über eine Leitung zur Abfuhr 32 von Luft aus der Vorrichtung abgeführt.

Weiter stromabwärts wird die Luft durch zweite Leitungen des Kreuzstromwärmetauschers 82 geleitet, in dem sie einen Teil Ihrer Wärmeenergie auf den einströmenden Gasstrom abgibt. Im Kreuzstromwärmetauscher 82 kann Wasser kondensieren, welches die Luft beim Durchströmen der Darrgutschicht D aufgenommen hat. Das hierdurch entstehende Kondensat kann durch einen Abfluss 61 abgeleitet werden. Schliesslich verlässt die Luft die Vorrichtung durch eine Austrittsöffnung 88.

Von hier an und im Folgenden bezeichnen gleiche Referenzzeichen gleiche Komponenten in den Figuren.

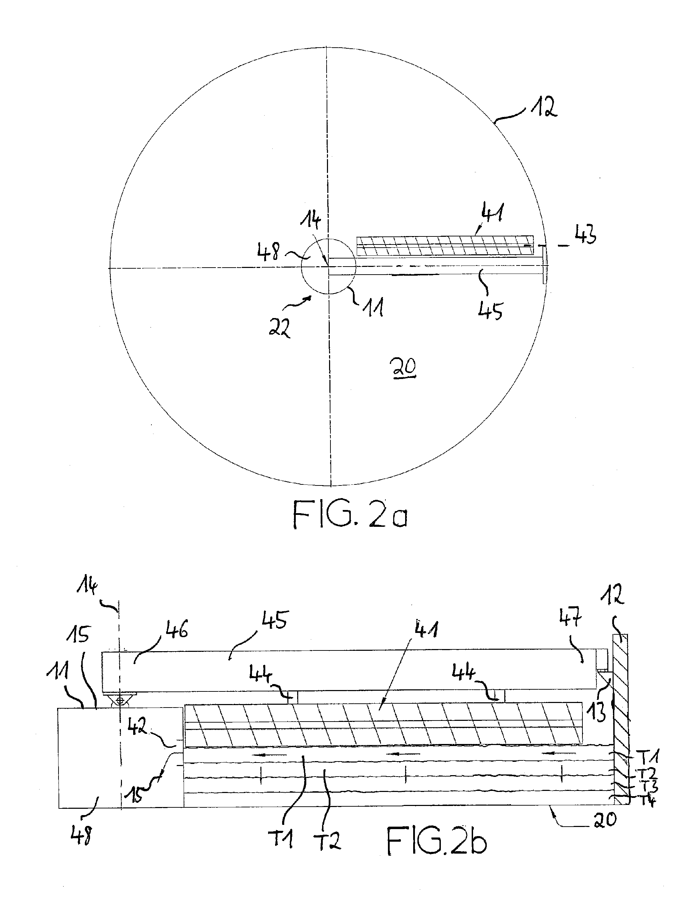

Die Figuren 2a und 2b zeigen zwei Ansichten einer weiteren Ausführungsform. Gemäss der horizontalen Schnittansicht in Figur 2a umfasst die Vorrichtung eine zylinderförmige Wand 12. Innerhalb der Wand 12 ist eine ringförmige Horde 20 angeordnet, deren Öffnungen zur Vereinfachung der Darstellung hier nicht gezeigt sind. Im mittleren Bereich 22 der Horde 20 befindet sich eine zylinderförmige Glocke 11, welche sich in vertikaler Richtung erstreckt und eine zentrale Entladeöffnung 48 enthält. Des Weiteren enthält die Vorrichtung oberhalb der Horde 20 eine Förderschnecke 41 mit einer Längsachse 43, um welche sie rotierbar ist und welche sich in horizontaler Richtung erstreckt. Die Förderschnecke 41 ist an einem sich ebenfalls in horizontaler Richtung erstreckenden Balken 45 befestigt.

Wie der seitlichen Schnittansicht in Figur 2b zu entnehmen ist, ist der Balken 45 an einem ersten, inneren Ende 46 am oberen, geschlossenen Ende 15 der Glocke 11 befestigt. Sowohl die Glocke 11 als auch der Balken 45 sind hierdurch gemeinsam um eine vertikale Achse 14 drehbar gelagert. Das äussere Ende 47 des Balkens 45 wird auf einer ringförmigen Schiene 13 geführt, welche sich von der Wand 12 radial nach innen erstreckt. Die Förderschnecke 41 ist über zwei in der Länge verstellbare Haltearme 44 am Balken 45 montiert.

Die Glocke 11 weist eine seitliche Abräumöffnung 42 auf. Durch Rotation der Förderschnecke 41 wird eine oberste Teilschicht T1 der Darrgutschicht D radial nach innen in Richtung der Glocke 11 gefördert. Dort wird die Teilschicht T1 der Darrgutschicht D durch die Abräumöffnung 42 gefördert und fällt von dort durch die Entladeöffnung 48 nach unten, wie durch den Pfeil 15 angedeutet wird.

Durch die gemeinsame Rotation der Förderschnecke 41 und der Glocke 11 um die vertikale Achse 14 kann die oberste Teilschicht T1 der Darrgutschicht D über die gesamte Fläche der Horde 20 abgetragen und in die Entladeöffnung 48 gefördert werden.

Anschliessend wird die Förderschnecke 41 durch Längenverstellung der Haltearme 44 relativ zur Wand 12, zur Horde 20 und zur Glocke 11 abgesenkt, beispielsweise um 5 cm. Durch weitere Rotation der Förderschnecke 41 um ihre Längsachse 43 kann eine zweite Teilschicht T2 der Darrgutschicht D abgetragen werden. Alternativ ist es auch denkbar und liegt im Rahmen der Erfindung, dass nicht die Förderschnecke 41 abgesenkt wird, sondern die Horde 20 relativ zur Wand 12, zur Förderschnecke 41 und zur Glocke 11 angehoben wird. In beiden Fällen können die Rotation der Förderschnecke 41 um die vertikale Achse 14 und das Senken bzw. Heben natürlich auch gleichzeitig verlaufen.

In der oben beschriebenen Ausführungsform sind also sowohl die Horde 20 als auch die Wand 12 unbeweglich. Es ist jedoch auch denkbar und liegt im Rahmen der Erfindung, dass die Wand 12 zusammen mit dem Balken 45 und der Förderschnecke 41 um die vertikale Achse 14 rotiert. Bei dieser Variante kann das äussere Ende 47 des Balkens 45 fest mit der Wand 12 verbunden sein, so dass eine ringförmige Schiene 13 nicht erforderlich ist. Alternativ dazu ist es ebenso denkbar und liegt im Rahmen der Erfindung, dass die Horde 20 um die vertikale Achse 14 drehbar ist. In dieser Variante müssen weder die Wand 12 noch der Balken 45 um die vertikale Achse 14 rotierbar sein. Die Förderschnecke 41 sollte jedoch relativ zur Horde 20 bewegbar sein, damit die Förderschnecke 41 möglichst die gesamte Fläche die Horde 20 überstreichen kann.

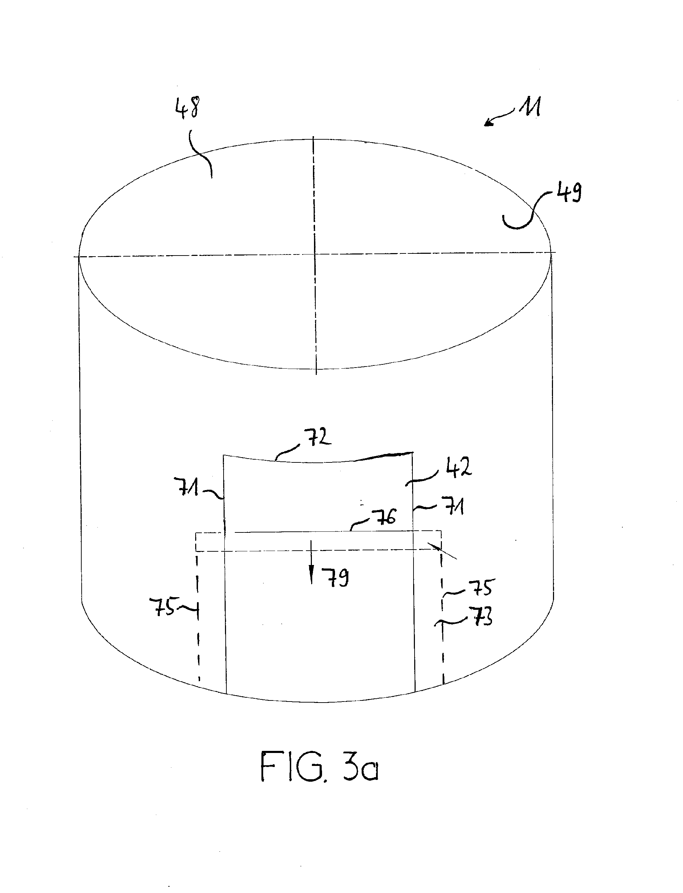

In den Ausführungsformen, in denen die Förderschnecke 41 in vertikaler Richtung verschoben wird, die Horde 20 jedoch nicht, ist es erforderlich, dass die Abräumöffnung 42 verstellbar ist. Ansonsten würde nämlich beim Abtragen der ersten, obersten Teilschicht T1 zumindest im mittleren Bereich 22 der Horde 20 auch ein Teil der zweiten Teilschicht D2 abgetragen werden, der möglicherweise noch gar nicht ausreichend getrocknet wurde. Die Figuren 3a bis 5b zeigen verschiedene Ausführungsformen der Glocke 11, mit denen eine derartige Verstellbarkeit der Abräumöffnung 42 erreicht werden kann.

Hierzu zeigt die Figur 3a in einer schematischen Darstellung eine erste Glocke 11 mit einer Abräumöffnung 42. Diese Abräumöffnung 42 wird von zwei geraden, vertikalen Kanten 71 und einer in Umfangsrichtung verlaufenden, horizontalen Kante 72 gebildet. Im Bereich der Abräumöffnung 42 ist ein Schieber 73 angeordnet, der flächig ausgebildet ist und derart geformt ist, dass er sich an die Innenwand 49 der Glocke 11 anschmiegt. Er ist durch zwei gerade, vertikale Kanten 75 und eine im Wesentlichen in Umfangsrichtung verlaufende, horizontale Kante 76 begrenzt.

Der Schieber ist 73 in vertikaler Richtung verschiebbar, wie durch den Pfeil 79 angedeutet ist. Je nach Einstellung der vertikalen Position des Schiebers 73 wird ein grösserer oder kleinerer Teil der Abräumöffnung 42 freigegeben, durch den Darrgut in die Entladeöffnung 48 eindringen kann.

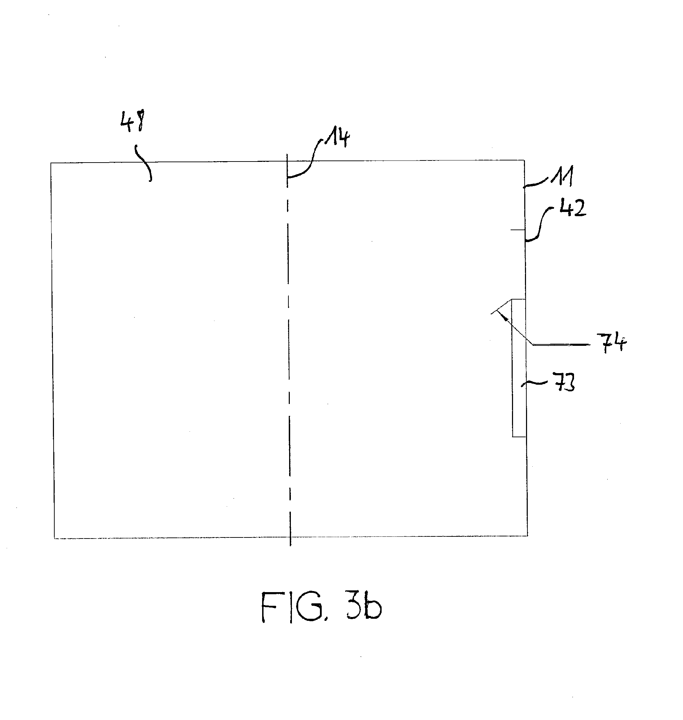

Wie der seitlichen Schnittansicht in Figur 3b zu entnehmen ist, weist der Schieber 73 in der hier dargestellten Ausführungsform ein Leitblech 74 auf, welches sich vom oberen Ende des Schiebers 73 nach schräg unten in die Entladeöffnung 48 hinein erstreckt. Mit Hilfe dieses Leitblechs 74 kann der Strom des Darrguts kontrolliert werden. Es ist aber auch denkbar und liegt im Rahmen der Erfindung, dass der Schieber 73 kein derartiges Leitblech 74 enthält.

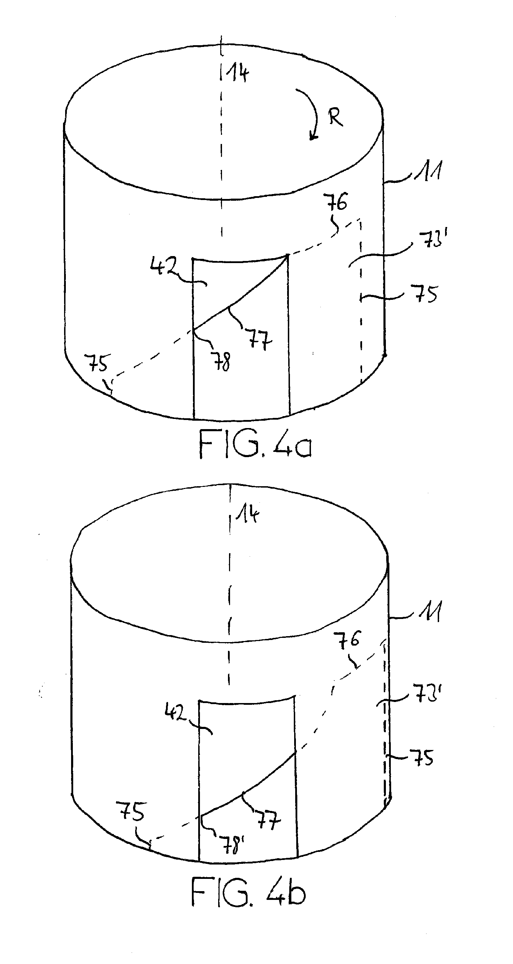

Die perspektivischen Ansichten der Figuren 4a und 4b zeigen eine weitere Ausführungsform. Die Abräumöffnung 42 hat die gleiche Form wie im Ausführungsbeispiel gemäss den Figuren 3a und 3b. Auch der Schieber 73' ist flächig ausgebildet und schmiegt sich in seiner Form an die Innenwand 49 der Glocke 11 an. Allerdings verfügt der Schieber 73' über eine schräg verlaufende Kante 77, welche eine der beiden vertikalen Kanten 75 und die horizontale Kante 76 miteinander verbindet. Die Glocke 11 rotiert beim Betrieb der Vorrichtung um die vertikale Achse 14, bevorzugt in der dargestellten Rotationsrichtung R. Bei dieser Rotationsrichtung R ist die kürzere der beiden vertikalen Kanten 75 des Schiebers 73' in der Rotationsrichtung R vorne angeordnet, während die längere der beiden vertikalen Kanten 75 in der Rotationsrichtung R hinten angeordnet ist.

Der Schieber 73' ist um eine vertikale Achse 14 relativ zur Glocke 11 verschwenkbar und rotiert beim Betrieb der Vorrichtung zusammen mit der Glocke 11 um die Achse 14. Die Figuren 4a und 4b zeigen zwei verschiedene Stellungen des Schiebers 73'. In der ersten, in Figur 4a dargestellten Stellung ist ein kleinerer Anteil der Abräumöffnung 42 freigegeben, wobei der unterste Punkt 78 des freigegebenen Anteils in einer ersten Höhe liegt. In der zweiten, in Figur 4b dargestellten Stellung wurde der Schieber 73' um die vertikale Achse 14 geschwenkt, wodurch nun ein grösserer Anteil der Abräumöffnung 42 freigegeben ist; der unterste Punkt 78' des freigegebenen Anteils liegt in einer zweiten Höhe, welche niedriger ist als die erste Höhe. In der ersten Stellung gemäss Figur 4a kann das Darrgut abgeräumt werden, welches sich oberhalb der ersten Höhe befindet; in der zweiten Stellung gemäss Figur 4b kann zusätzlich das Darrgut abgeräumt werden, welches sich zwischen der ersten Höhe und der zweiten Höhe befindet.

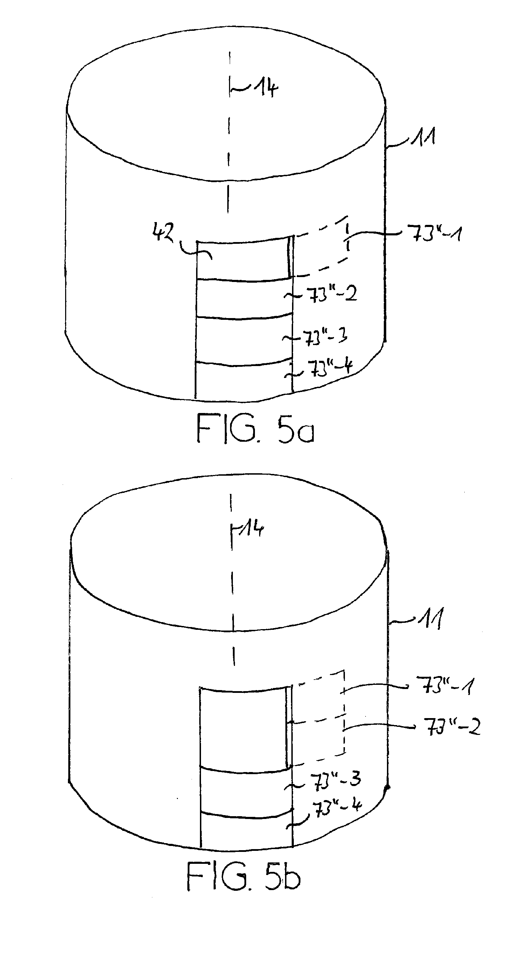

An der Glocke 11 gemäss den Figuren 5a und 5b sind vier übereinander angeordnete Schieber 73"-1 bis 73"-4 angeordnet, welche um eine vertikale Achse 14 relativ zur Glocke 11 und unabhängig voneinander verschwenkbar sind. In der Stellung gemäss Figur 5a befindet sich der oberste Schieber 73"-1 in einer Öffnungsstellung; die drei unteren Schieber 73"-2 bis 73"-4 befinden sich in einer Schliessstellung. In dieser Stellung ist nur der oberste Teil der Abräumöffnung 42 freigegeben. In Figur 5b befindet sich zusätzlich der zweitoberste Schieber 73"-2 in einer Öffnungsstellung. Hierdurch ist auch ein tiefer liegender Teil der Abräumöffnung 42 freigegeben.

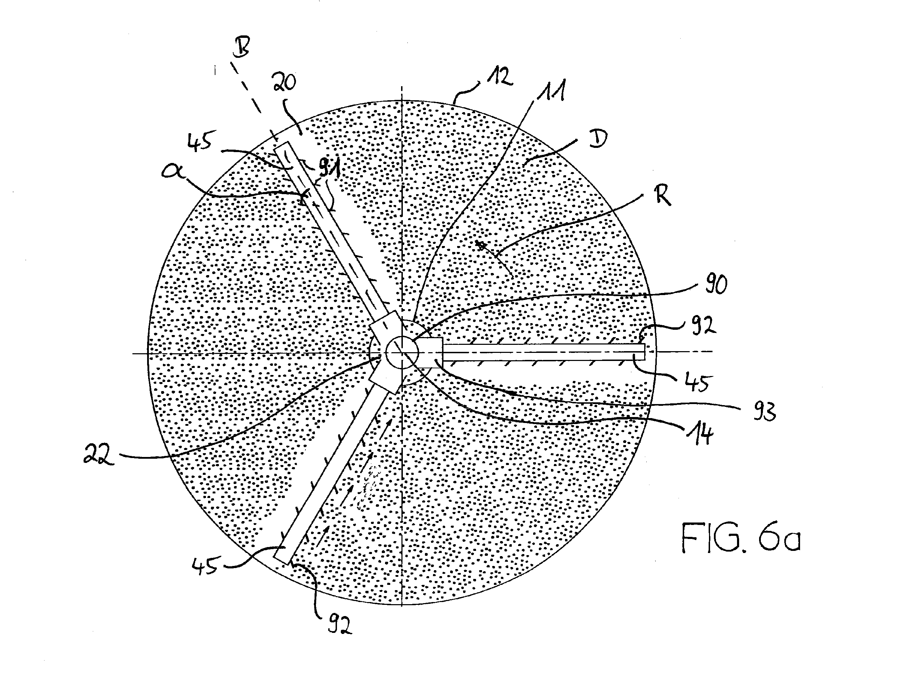

Die Figur 6a zeigt eine Draufsicht einer dritten erfindungsgemässen Vorrichtung. Diese enthält eine ringförmige Horde 20 mit einer Öffnung in einem mittleren Bereich 22. Durch die Öffnung im mittleren Bereich 22 erstrecken sich eine vertikal ausgerichtete zentrale Säule 90, welche um eine vertikale Achse 14 drehbar ist, sowie ein Glocke 11. An der Säule 90 sind drei Balkenhalterungen 93 angeordnet, an denen jeweils ein Balken 45 befestigt ist. Die Balken 45 erstrecken sich von den Balkenhalterungen 93 in radialer Richtung B nach aussen und sind in einem Winkelabstand von 120 ° zueinander angeordnet. An der Unterseite jedes Balkens 45 befinden sich sieben Schaber 91. Die Schaber 91 sind jeweils als rechteckige Bleche ausgebildet und unter einem Winkel α von etwa 50 ° zur radialen Richtung B ausgerichtet.

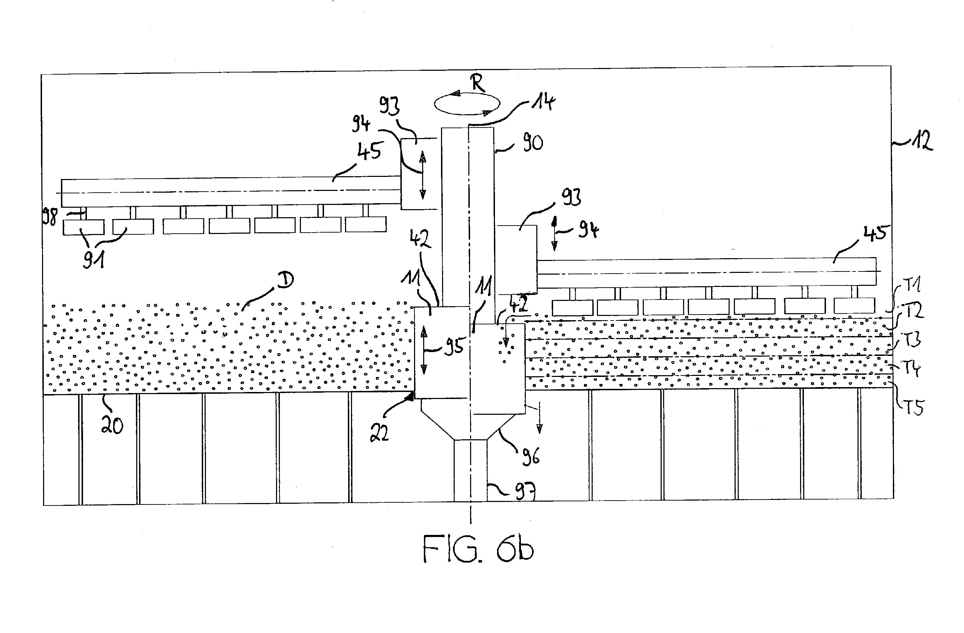

Durch Rotation der Säule 90 und der daran angeordneten Balken 45 in der Rotationsrichtung R bewegen sich die Schaber 91 relativ zur Horde 20. Hierdurch geraten Abtragflächen 92 der Schaber 91 in Kontakt mit einer auf der Horde 20 angeordneten Darrgutschicht D. Aufgrund der Wahl des Winkels α und der Rotationsrichtung R führt dies zu einem Abtragen eines Teils der Darrgutschicht D in den mittleren Bereich 22 der Horde 20.In Figur 6b ist eine seitliche Schnittansicht der Vorrichtung aus Figur 6a wiedergegeben. Figur 6b enthält eine linke Hälfte (links von der Achse 14) und eine rechte Hälfte (rechts von der Achse 14). Die linke und die rechte Hälfte zeigen verschiedene Betriebspositionen der Vorrichtung zu verschiedenen Zeitpunkten, die zur besseren Veranschaulichung der Funktion in ein und derselben Zeichnung dargestellt sind.

Wie durch die Doppelpfeile 94 angedeutet ist, sind die Balkenhalterungen 93 (sowohl die in der linken Hälfte von Figur 6a dargestellten als auch die beiden weiteren Balken 45) in vertikaler Richtung, d. h. parallel zur Achse 14, relativ zur Säule 90 verschiebbar. Auf diese Weise kann die Höhe der Balken 45 und damit auch die Höhe der Schaber 91 eingestellt werden, die mit jeweils einem Haltearm 98 an einem Balken 45 befestigt sind. Dabei ist zu beachten, dass bei dem hier beschriebenen Ausführungsbeispiel die Balken 45 tatsächlich stets in gleicher Höhe angeordnet sind; Figur 6b zeigt zwar in der linken Hälfte und in der rechten Hälfte verschiedene Höhen, die allerdings zu verschiedenen Zeitpunkten vorliegen. Die Glocke 11 ist zylinderrohrförmig ausgebildet und enthält an ihrer Oberseite eine Abräumöffnung 42. Auch die Glocke 11 ist in vertikaler Richtung verschiebbar, wie durch den Doppelpfeil 95 angedeutet ist.

In der links dargestellten Betriebsposition befinden sich der hier dargestellte Balken 45 (sowie die beiden weiteren hier nicht dargestellten Balken 45) oberhalb der Darrgutschicht D. Die Glocke 11 befindet sich in einer derartigen vertikalen Position, dass die Abräumöffnung 42 ungefähr in der gleichen Höhe liegt wie die Oberseite der Darrgutschicht D. In dieser Betriebsposition kann das auf der Horde 20 befindliche Darrgut gedarrt werden.

Durch Absenken der Balkenhalterungen 93 werden auch die Balken 45 und die Schaber 91 abgesenkt, so dass diese in die oberste Teilschicht T1 der Darrgutschicht D eindringen. Gleichzeitig wird die Glocke 11 abgesenkt, bis die Abräumöffnung 42 unterhalb der Oberseite der Darrgutschicht D liegt. Durch Rotation der Säule 90 und damit auch der Schaber 91 wird die oberste Teilschicht T1 der Darrgutschicht in Richtung des mittleren Bereichs 22 abgetragen und fällt dort durch die Abräumöffnung 42 hindurch und durch einen Trichter 96 in ein Sammelrohr 97, wo das Darrgut gesammelt wird. Bevorzugt verlaufen das Absenken der Schaber 91, das Absenken der Glocke 11 und die Rotation der Schaber 91 um die Achse 14 synchron. Nach dem Abtragen der ersten Teilschicht T1 können sukzessive auch die beiden weiteren Teilschichten T2, T3, T4 und T5 abgetragen werden.

## Patentansprüche

1. Verfahren zum Darren von Darrgut, insbesondere Getreide, Pseudogetreide, Ölsaaten oder Hülsenfrüchten, beinhaltend mindestens die Prozessschritte:
(i) Bereitstellen von zu behandelndem Darrgut auf einer Horde (20) mit mindestens einer Öffnung (21) zur Bildung einer Darrgutschicht (D) auf der Horde (20);
(ii) Erzeugung eines Gasstroms, insbesondere eines Luftstroms (L);
**dadurch gekennzeichnet, dass** der Gasstrom, insbesondere der Luftstrom (L), von einem der Darrgutschicht (D) zugewandten Raum (X) der Horde (20) zu einem der Darrgutschicht (D) abgewandten Raum (Y) der Horde (20) durch die Darrgutschicht (D) hindurch erzeugt wird.

2. Verfahren, insbesondere gemäss Anspruch 1, zum Darren von Darrgut, insbesondere Getreide, Pseudogetreide, Ölsaaten oder Hülsenfrüchten, beinhaltend mindestens die Prozessschritte:
(i) Bereitstellen von zu behandelndem Darrgut auf einer Horde (20) mit mindestens einer Öffnung (21) zur Bildung einer Darrgutschicht (D) auf der Horde (20);
(ii) Erzeugung eines Gasstroms, insbesondere eines Luftstroms (L), welcher durch die Darrgutschicht (D) hindurch strömt;
(iii) mindestens einmaliges, vorzugsweise mehrmaliges Abtragen einer der Horde (20) abgewandten Teilschicht (T, T1, T2, T3, T4, T5) der Darrgutschicht (D) aus dem Raum (X);
**dadurch gekennzeichnet, dass** das Abtragen im Schritt (iii) mit Hilfe einer Abtrageinrichtung erfolgt, welche relativ zur Horde (20) um eine insbesondere vertikale Achse (14) drehbar ist.

3. Verfahren gemäss Anspruch 2,
**dadurch gekennzeichnet, dass**
die Teilschicht (T, T1, T2, T3, T4, T5) der Darrgutschicht (D) mit Hilfe mindestens einer Förderschnecke (41) und/oder mindestens eines Schabers (91) abgetragen wird.

4. Verfahren gemäss einem der Ansprüche 2 und 3,
**dadurch gekennzeichnet, dass**
die Teilschicht (T, T1, T2, T3, T4, T5) der Darrgutschicht (D) in Richtung eines mittleren Bereichs (22) der Horde (20) abgetragen wird.

5. Verfahren gemäss einem der Ansprüche 2 bis 4, **dadurch gekennzeichnet, dass** in mindestens einem, bevorzugt in jedem Prozessschritt (iii), eine Teilschicht (T, T1, T2, T3, T4, T5) der Darrgutschicht (D) abgetragen wird, deren vertikale Abmessung höchstens 50 %, bevorzugt höchstens 25 % und besonders bevorzugt höchstens 10 % der vertikalen Abmessung der gesamten Darrgutschicht (D) vor der ersten Durchführung des dritten Prozessschrittes beträgt.

6. Vorrichtung, insbesondere zur Durchführung eines Verfahrens gemäss einem der Ansprüche 1 bis 5, zum Darren von Darrgut, insbesondere von Getreide, Pseudogetreide, Ölsaaten oder Hülsenfrüchten, umfassend zumindest einen Prozessraum (P) mit mindestens einer darin angeordneten Horde (20) zur Aufnahme einer Darrgutschicht (D), wobei die Horde (20) mindestens eine Öffnung (21) aufweist, sowie mindestens einen Ventilator (30) zur Erzeugung eines Gasstroms, insbesondere eines Luftstroms (L),
**dadurch gekennzeichnet, dass** der Ventilator (30) derart ausgebildet und angeordnet ist, dass ein Gasstrom, insbesondere ein Luftstrom (L), von einem der Darrgutschicht (D) zugewandten Raum (X) zu einem der Darrgutschicht (D) abgewandten Raum (Y) durch die Darrgutschicht (D) hindurch erzeugbar ist.

7. Vorrichtung, insbesondere gemäss Anspruch 6, zum Darren von Darrgut, insbesondere von Getreide, Pseudogetreide, Ölsaaten oder Hülsenfrüchte, umfassend zumindest einen Prozessraum (P) mit einer darin angeordneten Horde (20) zur Aufnahme einer Darrgutschicht (D) sowie eine Abtrageinrichtung (40),
**dadurch gekennzeichnet, dass**
die Abtrageinrichtung (40) relativ zur Horde (20) um eine insbesondere vertikale Achse (14) drehbar ist.

8. Vorrichtung gemäss Anspruch 7,
**dadurch gekennzeichnet, dass**
die Vorrichtung derart ausgestaltet ist, dass die Darrgutschicht (D) und die Abtrageinrichtung (40) relativ zueinander im Wesentlichen entlang einer Vertikale (V) zur Horde (20) verschiebbar sind.

9. Vorrichtung gemäss einem der Ansprüche 7 und 8, **dadurch gekennzeichnet, dass** die Abtrageinrichtung (40) mindestens eine Förderschnecke (41) zum Abtragen und Fördern von Darrgut aus dem Prozessraum (P) umfasst.

10. Vorrichtung gemäss Anspruch 9,
**dadurch gekennzeichnet, dass**
sich eine Längsachse (43) der Förderschnecke (41) im Wesentlichen in horizontaler Richtung erstreckt und die Förderschnecke (41) um eine im Wesentlichen vertikale Drehachse (14) drehbar ist.

11. Vorrichtung gemäss einem der Ansprüche 7 bis 10,
**dadurch gekennzeichnet, dass**
die Abtrageinrichtung (40) mindestens einen Schaber (91) umfasst.

12. Vorrichtung gemäss einem der Ansprüche 7 bis 11,
**dadurch gekennzeichnet, dass**
die Vorrichtung eine Glocke (11) aufweist, welche in einem mittleren Bereich (22) der Horde (20) angeordnet ist, und die Abtrageinrichtung (40) zur Förderung der Teilschicht (T, T1, T2, T3, T4, T5) der Darrgutschicht (D) in Richtung auf die Glocke (11) ausgebildet ist.

13. Vorrichtung gemäss einem der Ansprüche 6 bis 12, **dadurch gekennzeichnet, dass** die Vorrichtung eine Einrichtung zum Abkühlen (50) des behandelten Darrguts enthält.

14. Produkt, erhalten durch ein Verfahren gemäss einem der Ansprüche 1 bis 5 und/oder durch eine Vorrichtung gemäss einem der Ansprüche 6 bis 13.

15. Verfahren zum Umrüsten und/oder Aufrüsten einer Vorrichtung zum Darren von Darrgut, beinhaltend mindestens einen der Verfahrensschritte:
(i) Bereitstellung eines Ventilators (30), welcher derart ausgebildet und angeordnet ist, dass ein Gasstrom, insbesondere ein Luftstrom (L), von einem der Darrgutschicht (D) zugewandten Raum (X) zu einem der Darrgutschicht (D) abgewandten Raum (Y) durch die Darrgutschicht (D) hindurch erzeugbar ist und/oder
(ii) Bereitstellung einer Abtrageinrichtung (40), welche ausgebildet und in der Vorrichtung derart angeordnet ist, dass die Darrgutschicht (D) und die Abtrageinrichtung (40) relativ zueinander im Wesentlichen entlang einer Vertikale (V) zur Horde (20) verschiebbar sind.
